# EUROPÄISCHE PATENTSCHRIFT

(11) **EP 0 860 365 B1**
(45) Veröffentlichungstag und Bekanntmachung des Hinweises auf die Patenterteilung: **28.06.2000**
(21) Anmeldenummer: 98102611.5
(22) Anmeldetag: 16.02.1998
(51) Int. Cl.: B65D 1/02, B01L 3/00, C03B 23/047

(54) **Probenfläschchen mit günstiger Restmengenentnahme und Verfahren zu seiner Herstellung**
Easy-to-empty sample vial and process for making the same
Flacon d'échantillon à faible contenu résiduel et son procédé de fabrication

(30) Priorität: 17.02.1997 DE 29702774 U; 19.11.1997 DE 29720353 U
(43) Veröffentlichungstag der Anmeldung: 26.08.1998
(73) Patentinhaber: Glastechnik Gräfenroda GmbH, 99330 Gräfenroda (DE)
(72) Erfinder: Fischer, Eberhard, 99330 Gräfenroda (DE); Baumli, Christian, 8934 Knonau (CH)
(74) Vertreter: Liedtke, Klaus, Dr.

(56) Entgegenhaltungen:
- EP-A- 0 715 891
- DE-A- 19 606 274
- DE-A- 19 612 265

## Beschreibung

Die Erfindung betrifft ein Probenfläschchen mit günstiger Restmengenentnahme, bestehend aus einem zylindrischen Hohlkörper, der im unterem Bereich eine Verringerung des inneren Durchmessers aufweist und ein Verfahren zur Herstellung des Probenfläschchens unter Verwendung von in der Glastechnik als Flachläufer und Rundläufer bezeichneten Glasbearbeitungsmaschinen

Derartige Probenfläschchen, die in der Fachliteratur auch häufig als Vials bezeichnet werden, werden überall dort benötigt, wo eine maximale Restentleerung dieser Behältnisse erforderlich ist.

Bevorzugte Anwendungsgebiete sind die Analysentechnik, insbesondere die Chromatographie. Bei den dort verwendeten Analysenverfahren muß eine größere Anzahl von Proben schnell und exakt untersucht werden. Hierzu werden automatische Probengeber verwendet, in denen eine Mehrzahl der Probenfläschchen angeordnet sind, in denen sich die jeweiligen Proben befinden. Die automatischen Probengeber führen die Probe einem Analysengerät zu. Für die Probengefäße, die im allgemeinen als Autosamplervials bezeichnet werden, sind standardisierte Außenabmessungen erforderlich. Die gängigsten Standardgefäße weisen ca. 12 mm Aussendurchmesser und 32 mm Höhe oder ca. 15 mm Aussendurchmesser und 45 mm Höhe, auf. Es sind aber auch andere Abmessungen möglich. Weiterhin sind an den Probenfläschchen speziell ausgeformte Köpfe angebracht, die zur Aufnahme von Verschlusselementen dienen.

In vielen Fällen müssen Proben nahezu vollständig entnommen werden, d.h. mit einem wesentlich geringerem Restvolumen als es Standardgefäße zulassen. Um auch solche Proben mit automatischen Probengebern verarbeiten zu können, werden Gefäße benötigt, die gegenüber Standardgefässen bei gleichen äußeren Abmessungen ein optimiertes Restvolumen aufweisen. Das Problem der Restentleerung tritt auch bei der Konfektionierung von chemischen und pharmazeutischen Substanzen auf, insbesondere bei teuren Inhaltsstoffen.

Da für die zu untersuchenden Proben häufig starke organische Lösungsmittel zum Einsatz kommen, kommt als Werkstoff meist Glas zur Anwendung.

Im Stand der Technik sind verschiedene Lösungen zur Herstellung von Probenfläschchen mit optimierter Restentleerung bekannt.

Bekannt ist das sogenannte Q-Vial, bei dem zum Formen des Bodens das Ende eines Glasrohres zu einem Klumpen verschmolzen wird. Mit Hilfe eines Dornes der durch das Probenfläschchen geführt wird, wird ein V-förmiger Boden gebildet. Gleichzeitig wird eine Zange zur Bildung der äußeren Form, eingesetzt.

Bei einer zweiten Lösungsvariante wird ebenfalls der untere Flaschenteil eingeengt. Die Flasche endet jedoch spitz, so daß ein selbständiges Stehen nicht möglich ist und ein Zusatzteil aus Kunststoff verwendet wird, das als Fuß dient. Diese zweiteilige Ausführung erschwert die Handhabbarkeit und ist kostenaufwendig.

Nach EP 0 715 891 A1 ist ein Ganzglas-Fläschchen bekannt, bei dem ein Glaskörper im oberen Bereich einen kapillarförmigen Kanal enthält, Im Fußbereich ist innen eine konisch-zentrische Vertiefung zum Zweck der optimierten Restentleerung vorgesehen. Dieses Fläschchen hat den Nachteil, daß es nur mit erheblichen Fertigungsaufwand hergestellt werden kann.

Nach DE 169 06 274 A1 ist ein Probenfläschchen bekannt, bei dem ein Kapillarinsert aus Glas verwendet wird, wobei der Boden zur Spitze gezogen ist. Da hierbei das Glasfläschchen nicht selbständig stehen kann, ist es in einem zusätzlichen Kunststoffteil eingesetzt.
Nachteilig ist dabei, daß das Endprodukt aus zwei Teilen zusammengesetzt werden muß und daß die zwei Teile durch die Verwendung verschiedener Materialien unterschiedliche thermische und chemische Beständigkeit aufweisen.

In DE-A-196 12 265 ist ein Probenfläschchen und ein Verfahren zu dessen Herstellung beschrieben, das aus zwei Röhren erzeugt ist, wobei die innere Röhre vor dem Zusammenfügen beider Röhren mit einer Einengung versehen wird.
Hierbei ist ebenfalls nachteilig, daß das Probefläschchen aus zwei Teilen zusammengesetzt werden muß, was eine komplizierte Fertigung erfordert.

Der Erfindung liegt die Aufgabe zugrunde, ein nur aus einem Material bestehendes Probenfläschchen sowie ein zugehöriges Herstellungsverfahren anzugeben, das eine optimierte Restenleerung ermöglicht und das nahezu das gleiche Gesamtvolumen und die Außenabmessungen eines Standardgefäßes aufweist, und damit keine Einschränkungen bei der Anwendung gegenüber Standardgefäßen erforderlich macht.

Erfindungsgemäß gelingt die Lösung der Aufgabe mit den kennzeichnenden Merkmalen der Patentansprüche 1 und 5.

Vorteilhafte Ausgestaltungen sind in den Unteransprüchen angegeben.

Das Probenfläschchen besteht aus einem einstückig ausgebildet Glaskörper, bei dem eine Verringerung des inneren Durchmessers durch eine Einengung des zylindrischen Hohlkörpers erzeugt ist und bei dem unterhalb der Einengung eine Verbreiterung des Hohlglaskörpers zu einer Standfläche angebracht ist.

Das erfindungsgemäße Probenfläschchen ermöglicht eine Verbesserung der Restmengenentnahme gegenüber einem Standardgefäß durch Verringerung des Querschnittes im unterem Innenbereich und ist trotzdem ohne Zusatzteile standfähig. Es läßt sich in einfacher Weise durch Einengen (Einrollen) herstellen.

Das Probenfläschchen entspricht in Öffnung und Einstichtiefe einem Standardgefäß, so daß es ohne jede Einschränkung auf automatischen Probenträgervorrichtungen einsetzbar ist. Es kann ohne zusätzliche Elemente standsicher abgestellt werden.

Im Kopfbereich kann das Probenfläschchen mit allen herkömmlichen Gestaltungsformen zur Aufnahme von Verschlußteilen versehen werden, wie z.B. Schraub-, Bördel- oder Schnappverschlüsse.
Besonders vorteilhaft ist dabei, daß es ohne manuelle Glasbearbeitungsarbeitsgänge auf den in der Glasbearbeitung üblichen Maschinen, wie zum Beispiel den sogenannten Flach- und Rundläufern, hergestellt werden kann. Es vereint somit die Anwendungsvorteile mit einer kostengünstigen Herstellung.

Bei der in den Ansprüchen 3 und 4 beschriebenen Ausführung entsteht ein Glasgefäß mit Kunststoffschraubverschluß und PTFE-beschichteter Einlage, das die Vorteile einer Ampulle mit den Vorteilen einer Flasche vereint, nämlich einerseits eine fast 100 % - ige Dichtigkeit und andererseits die Wiederverschließbarkeit des Gefäßes, wodurch die weitere Verwendbarkeit des Inhaltes gewährleistet wird, ohne daß ein Umfüllen erforderlich wird. Dadurch werden die ansonsten bei der Nutzung von Standartgefäßen sich ergebenden Probleme weitgehend vermieden. Außerdem entfallen weitere Nachteile von Brechampullen, wie Verunreinigungen durch Glassplitter und Verletzungsgefahr.

Zur Herstellung wird beim Formen des mit Gewinde versehenen Kopfes der sonst erforderliche Metalldorn nicht benötigt. Statt dessen wird eine vorgefertigte Kapillare eingesetzt, deren Außendurchmesser dem Innendurchmesser des Kopfteiles entspricht. Die Kapillare erfüllt bei der Herstellung des Probengläschens gleichzeitig die Funktion des Innendorns, der für das Aufrollen des Gewindes erforderlich ist und wird stoffschlüssig mit dem Glasgefäß verbunden, so daß der gewünschte enge Hals in einfacher und exakter Weise erzeugt wird.

Die Erfindung wird im folgenden anhand eines Ausführungsbeispieles näher erläutert. In der zugehörigen Zeichnung zeigen:
Figur 1 eine Ausführungsform eines erfindungsgemäß hergestellten Probenfläschchens im Schnitt,
die Figuren 2 bis 5 die Schritte der Hertellung auf einer Flachläufer-Glasbearbeitungsmaschine, wobei in

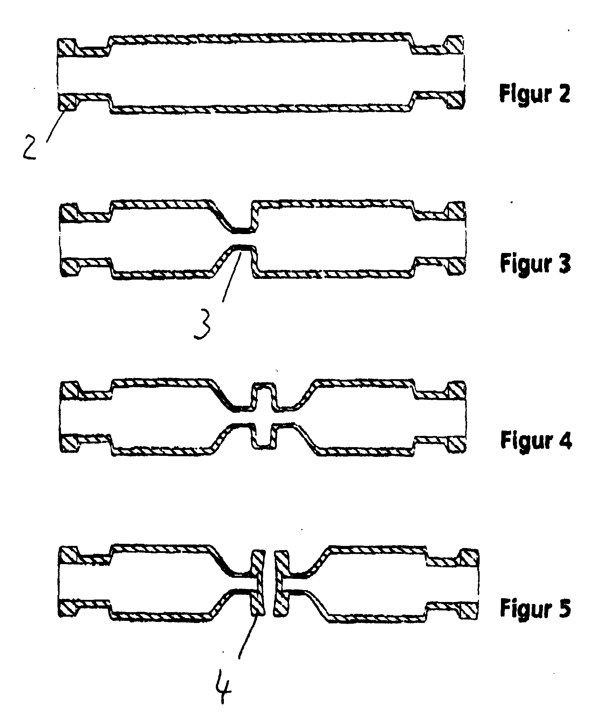

   Figur 2 das Glasrohr mit dem beidseitig angeschmolzenen Kopf,
   Figur 3 und 4 die beidseitige Einengung und in
   Figur 5 zwei fertige Probenfläschchen dargestellt sind,

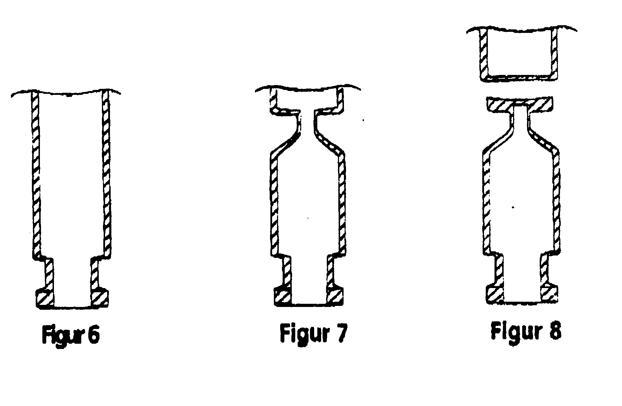

die Figuren 6 bis 8 erläutern die Bearbeitungsschritte bei der Herstellung auf einer Rundläufer-Glasbearbeitungsmaschine, wobei in
   Figur 6 das Glasrohr mit dem angeschmolzenen Kopf,
   Figur 7 die Einengung und in
   Figur 8 ein fertiges Probenfläschchen dargestellt ist
   und

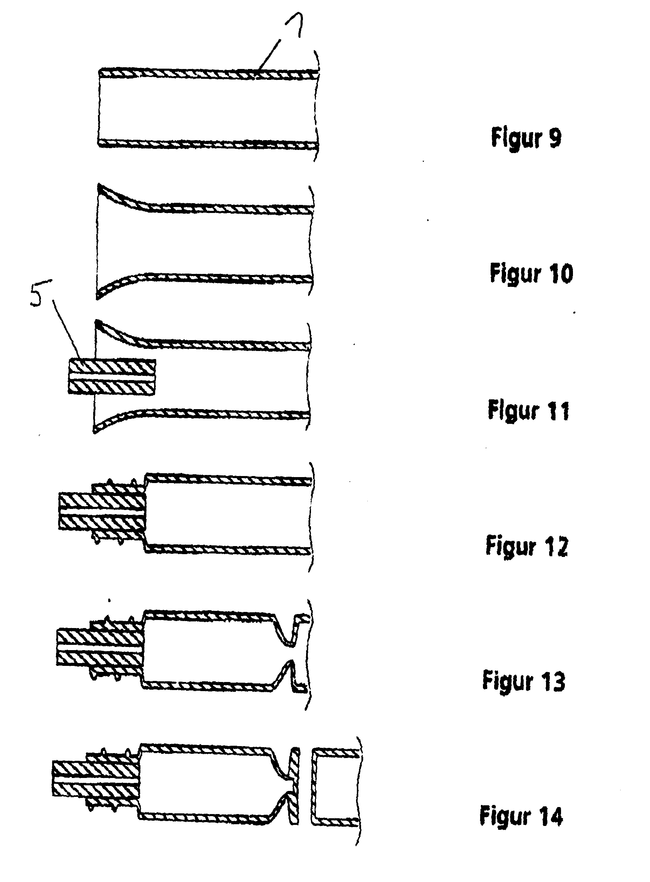

die Figuren 9 bis 15 eine Ausführungsform mit eingeschmolzener Kapillare im oberen Bereich des Hohlkörpers.

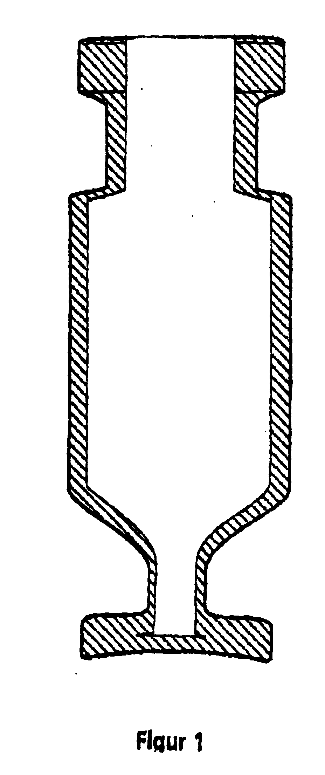

Wie aus Figur 1 ersichtlich, ist im oberen Bereich des Glaskörpers, am sogenannten Hals des Probefläschchens der bei derartigen Fläschchen übliche Kopf angeschmolzen. Im unteren Bereich ist das Probenfläschchen eingeengt und durch einen Boden verschmolzen.

Die in den Figuren 2 bis 5 dargestellten Fertigungsschritte zeigen eine Herstellungsmöglichkeit des Probenfläschchens, die unter Verwendung einer in der Glasbearbeitung als sogenannte Flachläufer bekannten Glasbearbeitungsmaschine erfolgt.

Beim Flachläufer sind die zu bearbeitenden Glasröhren auf einer waagerecht sich schrittweise bewegenden Transportvorrichtung aufgelegt und führen dabei eine Drehbewegung aus. Die Formung der Glasröhre erfolgt mit Hilfe von darunter angeordneten Heizvorrichtungen und Formwerkzeugen. Die Heizvorrichtungen können elektrische Strahler, Gasbrenner oder beliebige andere Wärmequellen sein. Üblicherweise werden Gasbrenner verwendet.

Gemäß Figur 2 werden am Rohling 1, der aus einem Glasrohr besteht, an den beiden Außenseiten die Verschlußköpfe 2 angeformt. In einem zweiten Schritt wird an dem Glasrohr dann wie in den Figuren 3 und 4 gezeigt, beidseitig eine Einengung 3 angeformt. Das so entstandene Doppelprobenfläschchen wird in der Mitte getrennt, so daß zwei Probenfläschchen entstehen An der Trennstelle wird dadurch an jedem der beiden Probenfläschchen ein Boden (4) gebildet.

Bei der Herstellung auf einem Rundläufer sind die zu bearbeitenden Glasröhren vertikal in einem drehenden Futter eingespannt. Die Formung der Glasröhre erfolgt mit Hilfe von Formwerkzeugen und darunter angeordneten Heizvorrichtungen. Als Heizvorrichtungen werden ebenfalls die beim Flachläufer angegebenen Wärmequellen angewendet.
Gemäß Figur 6 werden am Rohling 1 an der Außenseite der Verschlußkopf 2 angeformt. In einem zweiten Schritt wird das Glasrohr dann wie in den Figuren 7 dargestellt, eingeengt. Das so entstandene Probenfläschchen wird vom verbleibenden Glasrohr abgetrennt. Dabei wird an der Trennstelle am Probenfläschchen ein Boden 4 gebildet wird. Das fertige Probenfläschchen zeigt Figur 8.

In den Figuren 9 bis 14 ist eine Ausführungsform dargestellt, bei der im oberen Bereich des Hohlkörpers innen eine Kapillare 5 eingeschmolzen ist. Außen ist ein Kopf 2 mit Außengewinde angeformt. Das Probenfläschchen ist mit einer Verschlußkappe 6 aus Kunststtoff, die mit einem Innengewinde versehen ist, verschließbar. In der Verschlußkappe 6 befindet sich eine PTFE-beschichtete Einlage, die als Dichtelement 7 dient.

Bei der Herstellung wird gemäß Figur 9 von einem Glasröhrchen ausgegangen, das an einer Seite aufgeweitet wird, so daß die in Figur 10 dargestellte Form entsteht. Danach wird gemäß Figur 11 die Kapillare 5 eingeführt und der Kopf angeformt, wie aus Figur 12 ersichtlich ist. Alle weiteren Schritte verlaufen wie bei der Herstellung des Fläschchens ohne Kapillare, so daß beim Einsatz eines Flachläufers zwei Fläschchen entstehen und beim Einsatz eines Rundläufers, wie oben beschrieben, ein Fläschchen.

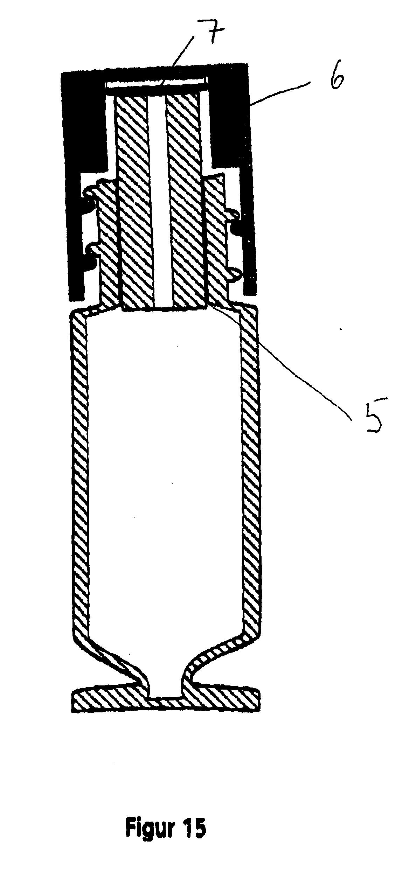

Figur 15 zeigt eine Schnittdarstellung dieses Probenfläschchens.

## Patentansprüche

1. Probenfläschchen mit günstiger Restmengenentnahme, bestehend aus einem zylindrischen Hohlkörper, der im unterem Bereich eine Verringerung des inneren Durchmessers aufweist, wobei das Probenfläschchen aus einem einstückig ausgebildet Glaskörper besteht und die Verringerung des inneren Durchmessers durch eine Einengung (3) des zylindrischen Hohlkörpers erzeugt ist, **dadurch gekennzeichnet,** daß unterhalb der Einengung (3) eine Verbreiterung des Hohlglaskörpers zu einer Standfläche angebracht ist.

2. Probenfläschchen nach Anspruch 1, **dadurch gekennzeichnet,** daß im oberen Bereich des Hohlkörpers eine zusätzliche Einengung angebracht ist und oberhalb der zusätzlichen Einengung ein Kopf (2) zur Aufnahme eines Verschlußelementes angeschmolzen ist.

3. Probenfläschchen nach Anspruch 1, **dadurch gekennzeichnet**, daß im oberen Bereich des Hohlkörpers ein Kopf (2) mit Außengewinde angeformt ist, bei dem in Inneren eine Kapillare (5) eingeschmolzen ist und die mit einer Verschlußkappe (6) aus Kunststtoff verschließbar ist.

4. Probenfläschchen nach Anspruch 3, **dadurch gekennzeichnet,** daß in der Verschlußkappe (6) eine PTFE-beschichtete Einlage als Dichtelement (7) eingefügt ist.

5. Verfahren zur Herstellung des Probenfläschchens nach einem der Ansprüche 1 oder 2, wobei folgende Verfahrensschritte ausgeführt werden:
- Vorschneiden eines Glasrohres zu einem Rohling (1) auf die doppelte Länge des Probenfläschchens,
- Anschmelzen je einer Kopfform an den Außenseiten des Rohlings (1), **dadurch gekennzeichnet,** daß
- Einengen des Rohlings (1) im unteren Bereich durch Erhitzen mit einer Gasflamme und Einrollen auf den gewünschten Durchmesser mit einem Einrollwerkzeug,
- Bilden einer Standfläche durch Trennen des Glasrohres.

6. Verfahren nach Anspruch 5, **dadurch gekennzeichnet,** daß in den oberen Bereich des Glaskörpers ein Kopf (2) mit Außengewinde angeformt wird, wobei beim Formen des Kopfes (2) eine Kapillare, deren Außendurchmesser dem Innendurchmesser des Glaskörpers im Kopfbereich entspricht, eingefügt wird, die als Dorn für das Aufrollen des Gewindes dient und die mit dem Glaskörper verschmolzen wird.

## Claims

1. Small sampling bottle allowing the easy withdrawal of residual quantities, consisting of a cylindrical hollow body which presents a reduction of the internal diameter in the lower part, while the small sampling bottle consists of a glass body forming a single piece and while the reduction of the internal diameter is created by a narrow section (3) of the cylindrical hollow body, **characterized in that** an enlargement of the hollow glass body is installed below the narrow section (3) in order to form a standing base.

2. Small sampling bottle as claimed in claim 1, **characterized in that** an additional narrow section is installed in the upper part of the hollow body, and in that a head (2) for the reception of a closing element is melted on above the additional narrow section.

3. Small sampling bottle as claimed in claim 1, **characterized in that** a head (2) with an external screw thread is formed integral in the upper part of the hollow body, in which a capillary tube (5) is fused in inside and which may be closed by means of a closing cap (6) made of synthetic material.

4. Small sampling bottle as claimed in claim 3, **characterized in that** an insert coated with PTFE is included as a sealing element (7) in the closing cap (6).

5. Procedure to manufacture the small sampling bottle as claimed in any claim 1 or 2, in which the following processing steps are performed:
- rough cutting of a glass tube to obtain a blank (1) twice as long as the small sampling bottle,
- melting on off one head form each to the outsides of the blank (1),
**characterized in that**
- a constriction of the blank (1) is obtained in the lower part by heating with a gas flame and rolling round to the desired diameter by means of a rolling-round tool and in that
- the creation of a standing base is obtained by cutting the glass tube.

6. Procedure as claimed in claim 5, **characterized in that** a head (2) with an external screw thread is formed integral in the upper part of the glass body, while a capillary tube, which has an external diameter corresponding to the internal diameter of the glass body in the head part, is inserted while forming the head (2), serves as a mandrel for rolling the thread and is fused together with the glass body.

## Revendications

1. Petite bouteille d'échantillonnage avec dispositif favorisant le prélèvement de la quantité résiduelle, composé d'un corps creux de forme cylindrique qui présente une diminution du diamètre intérieur dans la partie inférieure, tandis que la petite bouteille d'échantillonnage est constituée d'un corps de verre en une seule pièce et dont la réduction du diamètre intérieur est obtenue par un étranglement (3) du corps creux cylindrique, **caractérisée en ce sens** qu'au-dessous de l'étranglement se forme un élargissement du corps cylindrique creux en une surface d'appui.

2. Petite bouteille d'échantillonnage selon la revendication 1, **caractérisée en ce sens** que dans la partie supérieure du corps creux se trouve un étranglement supplémentaire et qu'une tête (2) destinée à recevoir un élément de fermeture est fondue au-dessus de l'étranglement supplémentaire.

3. Petite bouteille d'échantillonnage selon la revendication 1, **caractérisée en ce sens** que dans la partie supérieure du corps creux est moulée une tête (2) avec filetage extérieur, à l'intérieur de laquelle un tube capillaire (5) est fondu et qui peut être fermée avec un capuchon de fermeture (6) en plastique.

4. Petite bouteille d'échantillonnage selon la revendication 3, **caractérisée en ce sens** qu'une pièce intercalaire à revêtement en PTFE est insérée dans le capuchon de fermeture (6) pour servir de garniture d'étanchéité (7).

5. Procédé de fabrication de la petite bouteille d'échantillonnage selon une des revendications 1 ou 2, au cours duquel les phases de procédé suivantes sont réalisées :
- Découpage préalable d'un tube de verre en une ébauche (1) sur une longueur deux fois plus grande que celle de la petite bouteille d'échantillonnage,
- Mise en place par fusion d'une tête moulée sur les parties externes de l'ébauche (1), **caractérisée en ce sens que**
- un rétrécissement de l'ébauche (1) a lieu dans la partie inférieure par réchauffement au moyen d'un bec de gaz et par roulage au diamètre souhaité au moyen d'un outil de roulage et
- la formation d'une surface d'appui est réalisée par la séparation du tube de verre.

6. Procédé selon la revendication 5, **caractérisé en ce sens** qu'une tête (2) avec filetage extérieur est moulée dans la partie supérieure du corps de verre, au cours duquel, pendant le moulage de la tête (2), un tube capillaire, dont le diamètre extérieur correspond au diamètre intérieur du corps de verre dans la zone de la tête, est inséré, servant de tourillon pour le roulage du filetage et qui est fondu au tube de verre.
